# EUROPEAN PATENT SPECIFICATION

(11) **EP 4 112 153 B1**
(45) Date of publication and mention of the grant of the patent: **14.08.2024**
(21) Application number: 20920780.2
(22) Date of filing: 21.12.2020
(51) Int. Cl.: B01D 45/12, B04C 5/04, F04B 39/04, F25B 43/02, F04C 29/02, B01D 45/16, B01D 45/08, B04C 5/103, B04C 5/15

(54) **GAS-LIQUID SEPARATOR**
GAS-FLÜSSIGKEIT-ABSCHEIDER
SÉPARATEUR GAZ-LIQUIDE

(30) Priority: 25.02.2020 WO PCT/JP2020/007487; 11.09.2020 WO PCT/JP2020/034459
(43) Date of publication of application: 04.01.2023
(73) Proprietor: MAYEKAWA MFG. CO., LTD., Tokyo 135-8482 (JP)
(72) Inventor: TOMIYAMA, Yasushi, Tokyo 135-8482 (JP); HAYASHI, Ryuuji, Tokyo 135-8482 (JP); SEKINE, Ichiro, Tokyo 135-8482 (JP); INABA, Takashige, Tokyo 135-8482 (JP); ITAGAKI, Tsuyoshi, Tokyo 135-8482 (JP)
(74) Representative: Winter, Brandl - Partnerschaft mbB
(86) International application number: PCT/JP2020/047667
(87) International publication number: WO 2021/171755

(56) References cited:
- EP-A2- 2 169 332
- JP-A- 2001 246 216
- JP-A- 2004 052 710
- JP-A- 2013 044 456
- JP-A- 2019 072 688
- JP-A- H05 277 444
- JP-A- H05 296 610
- JP-U- S5 676 054

## Description

### TECHNICAL FIELD

The present invention relates to a gas-liquid separator that separates gas and liquid from a gas-liquid mixture.

### BACKGROUND ART

In a gas compressor that compresses gas, such as air, a refrigerant gas, or a process gas, for the purpose of cooling, lubrication or the like, lubricating oil (liquid), such as refrigerating machine oil, is used for gas, such as air or gas suctioned into the compressor. Accordingly, lubricating oil is present in a mixed state in the gas ejected from the compressor.

Therefore, it is necessary for the gas ejected from the compressor to be temporarily introduced into a gas-liquid separator so as to separate refrigerating machine oil in the gas-liquid separator.

As such a gas-liquid separator, for example, Patent Literature 1 described below discloses a gas-liquid separator that centrifuges gas and liquid by blowing a gas-liquid mixture into a body portion having a cylindrical shape.

In the gas-liquid separator disclosed in Patent Literature 1, a guide plate having a curved shape is attached to a gas-liquid separator body (body portion), being a pressure vessel having a cylindrical shape, with a predetermined distance between an inner wall of the body portion and the guide plate to form a guide path between the inner wall of the body portion and the guide plate, thus causing a gas-liquid mixture to swirl in a long-distance receiver tank.

### Citation List

### Patent Literature

Patent Literature 1: JP 2004-52710 A
An oil separator having the features of the preamble of claim 1 is known from EP 2 169 332 A2. JP H05 296610 A and JP H05 277444 A represent relevant background art.

### SUMMARY OF INVENTION

### Technical Problem

However, in the gas-liquid separator disclosed in the above-mentioned Patent Literature 1, the guide plate is formed to have a shape where the distance between the guide plate and the inner wall of the body portion gradually increases within a range of a predetermined length from one end toward the other end side of the guide plate and hence, a flow velocity of a gas-liquid mixture that flows into the body portion decreases in the guide path. When the flow velocity of the gas-liquid mixture decreases, there may be a case where the gas-liquid mixture does not sufficiently swirl in the body portion, so that there is a possibility that gas and liquid cannot be suitably separated. Further, an introduction passage is attached to the body portion in a state of being parallel to a tangent with respect to an outer wall of the body portion and of being disposed at a position close to the tangent. Accordingly, it is difficult to attach the introduction passage in manufacture, and the number of work steps increases.

The present invention has been made to solve the above-mentioned problems, and it is an object of the present invention to provide a small-sized or compact gas-liquid separator that can suitably separate gas and liquid by increasing the flow velocity of the gas-liquid mixture that flows into the body portion. The object is achieved by the subject-matter of claim 1. Advantageous developments are subject-matter of the dependent claims.

### Solution to Problem

A gas-liquid separator according to the present invention that achieves the above-mentioned object is a gas-liquid separator that separates gas and liquid from a gas-liquid mixture. The gas-liquid separator includes: a body portion having a cylindrical shape; an introduction passage provided in a state of communicating with the body portion, the gas-liquid mixture being introduced through the introduction passage; a rectifying plate attached to the body portion to extend in a chord length direction of a circular arc formed at a barrel of the body portion, the rectifying plate being configured to rectify the gas-liquid mixture; and an exhaust flow passage provided for gas from which liquid is separated. The rectifying plate has a narrow width portion configured such that a distance between the rectifying plate and an inner wall of the body portion gradually decreases toward an end portion from which the gas-liquid mixture flows out. A swirl portion in the body portion is formed by the body portion extending in an up-and-down direction and a partition plate.

### Advantageous Effects of Invention

In the above-mentioned gas-liquid separator, the rectifying plate has the narrow width portion configured such that the distance between the rectifying plate and the inner wall of the body portion gradually decreases toward the end portion from which the gas-liquid mixture flows out. Accordingly, it is possible to increase a flow velocity of the gas-liquid mixture and it is possible to effectively make use of a space in the barrel and hence, gas and liquid can be suitably separated.

### BRIEF DESCRIPTION OF DRAWINGS

[Figure 1] Figure 1 is a schematic transparent view showing a gas-liquid separator according to an embodiment of the present invention.
[Figure 2] Figure 2 is a schematic vertical cross-sectional view showing the gas-liquid separator according to this embodiment.
[Figure 3] Figure 3 is a diagram taken along a line A-A and seen from a direction indicated by arrows in Figure 2, the diagram showing the gas-liquid separator according to this embodiment.
[Figure 4] Figure 4 is a diagram for describing a configuration of a rectifying plate of the gas-liquid separator according to this embodiment.
[Figure 5] Figure 5 is a diagram showing a gas-liquid separator according to a modification 1, the diagram corresponding to Figure 3.
[Figure 6] Figure 6 is a diagram showing the gas-liquid separator according to the modification 1, the diagram corresponding to Figure 4.
[Figure 7] Figure 7 is a diagram showing a gas-liquid separator according to a modification 2, the diagram corresponding to Figure 2.
[Figure 8] Figure 8 is a diagram showing a gas-liquid separator according to a modification 3, the diagram corresponding to Figure 2.
[Figure 9] Figure 9 is a schematic bottom view showing the gas-liquid separator according to the modification 3.
[Figure 10] Figure 10 is a diagram showing a gas-liquid separator according to a modification 4, the diagram corresponding to Figure 2.
[Figure 11] Figure 11 is a graph showing a relationship between a flow velocity of a gas-liquid mixture and a separation efficiency.

### DESCRIPTION OF EMBODIMENTS

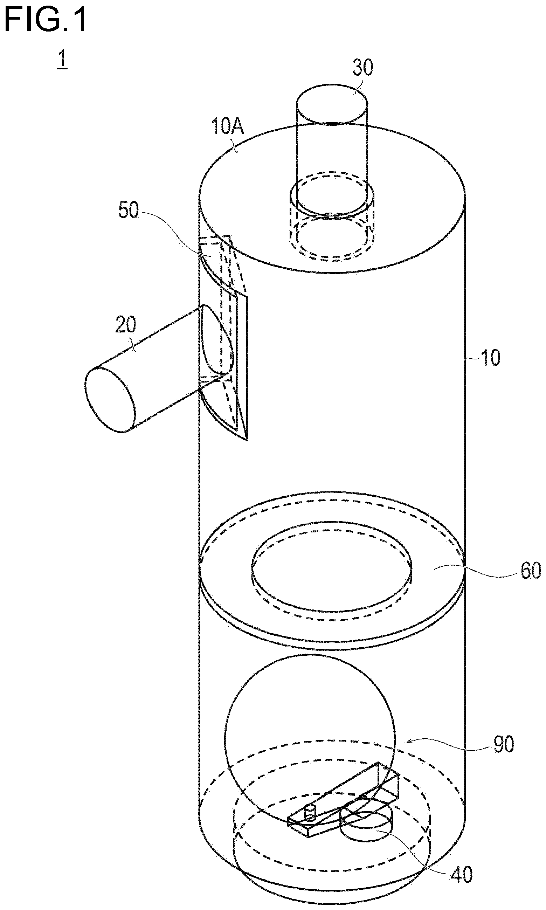

An embodiment of the present invention will be described with reference to Figure 1 to Figure 4. In the description of the drawings, identical elements are given the same reference symbols, and the repeated description will be omitted. The dimensional ratios in the drawings are exaggerated for convenience of description, and may be different from the actual ratios.

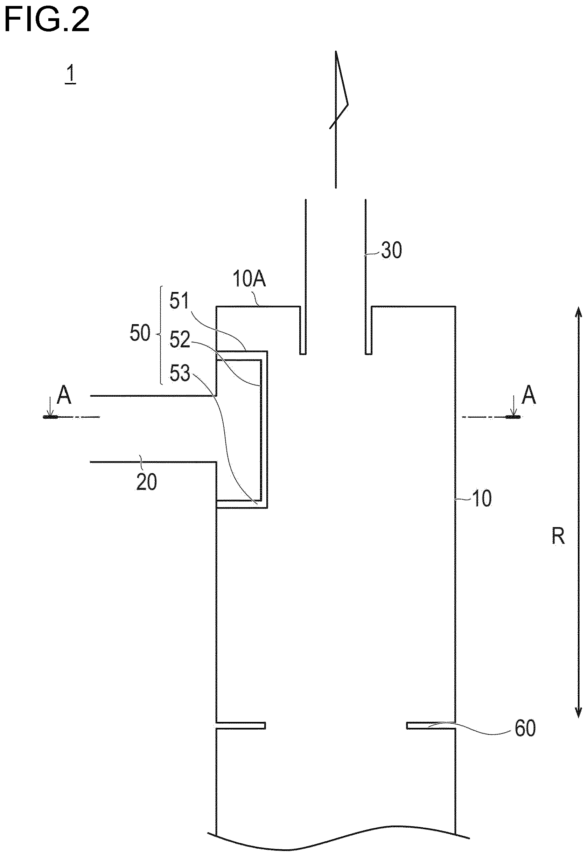

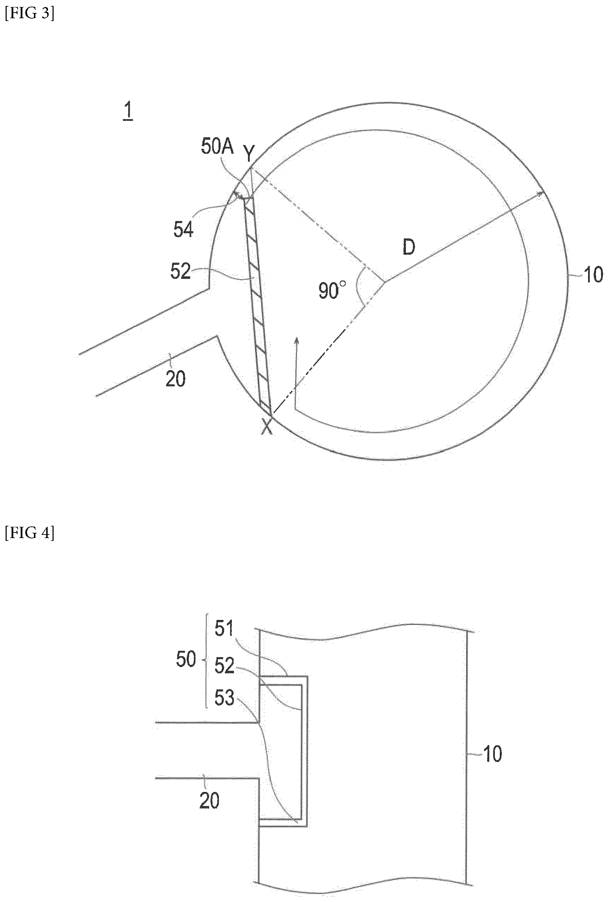

Figure 1 is a schematic transparent view showing a gas-liquid separator 1 according to an embodiment of the present invention. Figure 2 is a schematic vertical cross-sectional view showing the gas-liquid separator 1 according to this embodiment. Figure 3 is a diagram taken along a line A-A and seen from a direction indicated by arrows in Figure 2, the diagram showing the gas-liquid separator 1 according to this embodiment. Figure 4 is a diagram for describing a configuration of a rectifying plate 50 of the gas-liquid separator 1 according to this embodiment.

As shown in Figure 1, the gas-liquid separator 1 includes a body portion 10, an introduction passage 20, an exhaust flow passage 30, an oil discharge flow passage 40, the rectifying plate 50, and a partition plate 60, the body portion 10 having a cylindrical shape, a gas-liquid mixture being introduced through the introduction passage 20, gas being exhausted through the exhaust flow passage 30, a refrigerating machine oil being discharged through the oil discharge flow passage 40, the rectifying plate 50 rectifying the gas-liquid mixture, and the partition plate 60 being provided at a position lower than the introduction passage 20. The gas-liquid separator 1 is used for a gas compressor, is preferably used for a high-speed multicylinder refrigerating machine, and is more preferably used for a high-speed multicylinder refrigerating machine for ship. The gas-liquid separator 1 is used for returning oil accompanied by a compressed gas to a crankcase.

The body portion 10 is formed into a cylindrical shape extending in an up-and-down direction. In this configuration, unlike a configuration disclosed in JP 5-296610 A in which a conical funnel is provided at a lower portion or a configuration in which a swirl flow is generated by using a gas outflow pipe as an inner cylinder, there is no inner cylinder forming a resistance against a swirl flow is not provided and hence, the swirl flow is efficiently formed only by the cylindrical shape. Accordingly, by providing the partition plate 60, it is possible to narrow a swirl region R (see Figure 2). Therefore, by increasing a swirl speed without dispersing the swirl flow, it is possible to improve a separation efficiency. Further, there is no conical funnel portion and hence, it is possible to form the gas-liquid separator 1 in a compact manner.

Although the body portion 10 is formed of a steel pipe, for example, the body portion 10 is not limited to the steel pipe. Although the size of the body portion 10 is not particularly limited, it is preferable to set the size of the body portion 10 to a size that allows gas and liquid to be suitably separated. Specifically, it is preferable to set the size of the body portion 10 to a volume that allows a gas-liquid mixture to have a retention time of 0.6 seconds or more.

As shown in Figure 3, the rectifying plate 50 is disposed to extend in a chord length direction of a circular arc formed at a barrel of the body portion 10 when viewed from above. One end of the rectifying plate 50 is connected to an inner wall of the body portion 10, and the other end of the rectifying plate 50 has an end portion 50A. The rectifying plate 50 has a narrow width portion configured such that a distance between the rectifying plate 50 and the inner wall of the body portion 10 gradually decreases.

As shown in Figure 1 and Figure 2, the introduction passage 20 is provided in a state of communicating with the body portion 10. The introduction passage 20 is provided as shown in Figure 3. As shown in Figure 3, the introduction passage 20 is provided at a free angle with respect to a center of the body portion 10 within a range of a circular arc formed with a length corresponding to 1/4 or less (90° or less shown in Figure 3) of a circumference of the barrel of the body portion 10.

In a case where the introduction passage 20 is attached to extend in a tangential direction with respect to the body portion 10, for example, it is difficult to form a distorted hole in the body portion 10 and to weld the introduction passage 20 to the body portion 10. In contrast, in the gas-liquid separator 1 according to this embodiment, the introduction passage 20 is provided at the free angle and with a free offset amount with respect to the center of the body portion 10 and hence, it is possible to easily weld the introduction passage 20 to the body portion 10.

As shown in Figure 1, the exhaust flow passage 30 is provided at an upper portion of the body portion 10. Gas (gas) separated from a refrigerating machine oil (liquid) is exhausted through the exhaust flow passage 30.

As shown in Figure 2, an insertion portion of the exhaust flow passage 30 is configured to extend downward a short distance from an upper end portion 10A of the body portion 10.

For example, assume a case where the exhaust flow passage 30 has no insertion portion and is configured to extend upward from the upper end portion 10A, and the introduction passage 20 and the exhaust flow passage 30 are disposed close to each other. In such a case, there is a possibility that, of a gas-liquid mixture that flows out in an upward direction from the end portion 50A of the rectifying plate 50, a portion of gas from which refrigerating machine oil is not sufficiently separated or a portion of refrigerating machine oil separated from the gas due to impingement separation is suctioned into the exhaust flow passage 30 and is discharged to the outside.

In contrast, the gas-liquid separator 1 according to this embodiment is configured such that the insertion portion of the exhaust flow passage 30 extends downward in a short distance from the upper end portion 10A of the body portion 10. Accordingly, of a gas-liquid mixture that flows out from the end portion 50A of the rectifying plate 50, an unseparated gas that is discharged to an outer peripheral region of the insertion portion in a space above the rectifying plate 50 or refrigerating machine oil separated from the gas is prevented from directly flowing into the exhaust flow passage 30 and hence, it is possible to suitably suppress a situation where the unseparated gas or the refrigerating machine oil is discharged to the outside.

As shown in Figure 2, it is preferable to stop the downward extension of the insertion portion of the exhaust flow passage 30 before the insertion portion reaches a position in the vicinity of a height of a first extending portion 51 of the rectifying plate 50, which will be described later. Such a configuration can suppress a situation where the insertion portion of the exhaust flow passage 30 obstructs a generated swirl flow. Further, the insertion portion of the exhaust flow passage 30 can be easily assembled and constructed.

A lower portion of the body portion 10 forms an oil storage portion. As shown in Figure 1, the oil discharge flow passage 40 is provided at the lower portion of the body portion 10. Refrigerating machine oil separated from gas is discharged through the oil discharge flow passage 40. A float valve 90 is disposed above the oil discharge flow passage 40. The float valve 90 has a known configuration and hence, the detailed description of the float valve 90 will be omitted.

When the float valve 90 is opened, refrigerating machine oil stored at the lower portion of the body portion 10 is discharged through the oil discharge flow passage 40. After a lapse of a predetermined time period, the float valve 90 is closed and refrigerating machine oil is stored at the lower portion of the body portion 10.

The rectifying plate 50 causes a gas-liquid mixture introduced through the introduction passage 20 to be subject to impingement separation and changes a flow direction to a circumferential direction to rectify the flow. At the same time, the rectifying plate 50 increases a flow velocity of the gas-liquid mixture introduced through the introduction passage 20.

As shown in Figure 3 and Figure 4, the rectifying plate 50 is fixed to an inner wall of an inflow portion formed in the inside of the body portion 10. The rectifying plate 50 includes the first extending portion 51, a second extending portion 52, and a third extending portion 53, the first extending portion 51 extending inward in the substantially horizontal direction from an inner wall of the body portion 10, the second extending portion 52 being continuously formed with the first extending portion 51 and extending in a downward direction, the third extending portion 53 being continuously formed with the second extending portion 52 and extending to the inner wall of the body portion 10. For example, as shown in Figure 3, the rectifying plate 50 is attached to extend along an X-Y line, that is, to extend in a chord length direction of a circular arc formed with a length corresponding to 1/4 or less (90° or less shown in Figure 3) of the circumference of the barrel of the body portion 10. As shown in Figure 4, the rectifying plate 50 is formed into a square U shape or a U shape when viewed in a front view. The rectifying plate 50 may be formed as an integral body by the first extending portion 51, the second extending portion 52, and the third extending portion 53.

Although a method for fixing the first extending portion 51 and the third extending portion 53 to the inner wall of the body portion 10 is not particularly limited, the first extending portion 51 and the third extending portion 53 are fixed to the inner wall of the body portion 10 by welding, for example. The rectifying plate 50 may be integrally formed with the inner wall of the body portion 10. As described above, the first extending portion 51 does not vary the shape of a narrow width portion 54 with respect to the body portion 10 and hence, it is possible to prevent breakage of the rectifying plate 50 or a reduction in service life of the rectifying plate 50. As shown in Figure 3, the rectifying plate 50 extends to cover the introduction passage 20 such that a gas-liquid mixture introduced through the introduction passage 20 impinges on the rectifying plate 50.

Figure 3 shows one rectifying plate 50 that has both a function of an impingement separation portion and a function of a flow direction rectifying portion. The flow direction rectifying portion may be formed by the rectifying plate 50 where the flow passage is narrowed toward the narrow width portion 54.

The narrow width portion 54 has a narrow flow passage toward an internal opening. The narrow width portion 54 generates a swirl flow in the inside of the barrel while ensuring a gas flow velocity suitable for centrifugation. The narrow width portion 54 also has a function of causing the gas-liquid mixture to diagonally impinge on a flow swirling in the barrel so as to prevent the gas-liquid mixture from opposing the flow swirling in the barrel.

As shown in Figure 3 and Figure 4, the first extending portion 51 is formed to have a linear shape when viewed from above and when viewed in a front view. As shown in Figure 4, the second extending portion 52 is also formed to have a linear shape when viewed in a front view.

As described above, the first extending portion 51 and the third extending portion 53 are fixed to the inner wall of the body portion 10 at positions above and below the introduction passage 20 and hence, the first extending portion 51 and the third extending portion 53 act as baffle plates. Accordingly, it is possible to suitably suppress a situation where, of the gas-liquid mixture introduced through the introduction passage 20, refrigerating machine oil is discharged through the exhaust flow passage 30.

As shown in Figure 3, the first extending portion 51 and the third extending portion 53 of the rectifying plate 50 have the narrow width portion 54 configured such that a distance between the rectifying plate 50 and the inner wall of the body portion 10 gradually decreases toward the end portion 50A when viewed from above, the gas-liquid mixture flowing out from the end portion 50A. That is, in the vicinity of the narrow width portion 54, the rectifying plate 50 gradually approaches the inner wall of the body portion 10 toward the end portion 50A of the first extending portion 51 and the third extending portion 53. As shown in Figure 3, the rectifying plate 50 is formed to have a linear shape when viewed from above. With such a configuration, it is possible to increase a flow velocity of the gas-liquid mixture and hence, gas and liquid can be separated more suitably. Further, such a configuration does not require a guide plate and a guide path that are formed in the circumferential direction for approximately half of the circumference, the guide plate and the guide path being disclosed in JP 2004-52710 A. Accordingly, a simple configuration can be achieved.

When the flow velocity of the gas-liquid mixture in the introduction passage 20 is 4 m/s to 10 m/s, for example, the flow velocity of the gas-liquid mixture at the end portion 50A of the rectifying plate 50 is 6 m/s to 15 m/s.

As shown in Figure 1, the partition plate 60 is provided at a position lower than the introduction passage 20. The partition plate 60 is connected to the inner wall of the body portion 10. The partition plate 60 has a small inner diameter, thus having an inner diameter of a so-called toroidal shape. Although the inner diameter of the partition plate 60 is not particularly limited, the inner diameter of the partition plate 60 is 0.4 to 0.6 times the inner diameter of the body portion 10.

The partition plate 60 is formed separately from the body portion 10. The partition plate 60 is fixed to the body portion 10 by welding, for example.

The partition plate 60 is formed along an XY plane . That is, the partition plate 60 is configured to be substantially horizontal without being inclined with respect to the gas-liquid separator 1. The partition plate 60 is provided along the horizontal direction as described above and hence, it is possible to easily manufacture the gas-liquid separator 1.

By providing the partition plate 60 as described above, compared with a configuration where the partition plate is not provided, the swirl region R (see Figure 2) extending along the up-and-down direction is narrowed and hence, it is possible to increase a swirl speed. Accordingly, it is possible to suitably separate gas and liquid.

As shown in Figure 1, the partition plate 60 is disposed at a position sufficiently away from the exhaust flow passage 30. With such a configuration, oil adhering to the inner wall of the body portion 10 due to the swirl flow of the gas-liquid mixture is gravitationally precipitated and temporarily stays on the partition plate 60, and then descends to the oil discharge flow passage 40 from an opening portion of the partition plate 60 without flowing out through the exhaust flow passage 30, the oil discharge flow passage 40 being disposed at a position lower than the opening portion of the partition plate 60.

When a gas-liquid mixture is introduced into the gas-liquid separator 1 having the above-mentioned configuration through the introduction passage 20, the introduced gas-liquid mixture flows between the inner wall of the body portion 10 and the rectifying plate 50 and flows out from the end portion 50A of the rectifying plate 50. The rectifying plate 50 has the narrow width portion 54 and hence, the gas-liquid mixture flows out from the end portion 50A of the rectifying plate 50 at an increased flow velocity. The gas-liquid mixture that flows out from the end portion 50A of the rectifying plate 50 swirls along the inner wall of the body portion 10, so that gas and liquid are centrifuged (see Figure 3) . In a region where swirling starts from the end portion 50A of the rectifying plate 50, there is no obstacles inhibiting the formation of the swirl flow, such as the inner cylinder, and no surface or protrusion impinging on oil droplets at right angles and thus causing scattering of the oil droplets. Accordingly, centrifugation can be performed by effectively using the inside of the barrel and hence, a high efficiency is achieved.

In a case where oil droplets of refrigerating machine oil have a small size, the refrigerating machine oil is not easily centrifuged. Therefore, when the gas-liquid mixture swirls along the inner wall of the body portion 10, oil droplets are collected to form large oil droplets. With such a configuration, it is possible to cause the oil droplets to be gravitationally precipitated along the inner wall of the body portion 10.

As described above, the gas-liquid separator 1 according to this embodiment is the gas-liquid separator 1 that separates gas and liquid from a gas-liquid mixture. The gas-liquid separator 1 includes the body portion 10, the introduction passage 20, the rectifying plate 50, and the exhaust flow passage 30, the body portion 10 having a cylindrical shape, the introduction passage 20 being provided in a state of communicating with the body portion 10, the gas-liquid mixture being introduced through the introduction passage 20, the rectifying plate 50 being attached to the body portion 10 and rectifying the gas-liquid mixture to increase a flow velocity, and the exhaust flow passage 30 being provided for gas from which liquid is separated. The rectifying plate 50 is attached to extend in the chord length direction of the circular arc formed with the length corresponding to 1/4 or less (90° or less as shown in Figure 3) of the circumference of the barrel of the body portion 10. The introduction passage 20 is connected at a free angle and a free offset amount within a range of the circular arc. The rectifying plate 50 has the narrow width portion 54 configured such that a distance between the rectifying plate 50 and the inner wall of the body portion 10 gradually decreases toward the end portion 50A from which the gas-liquid mixture flows out. In the gas-liquid separator 1 having such a configuration, the rectifying plate 50 has the narrow width portion 54 configured such that the distance between the rectifying plate 50 and the inner wall of the body portion 10 gradually decreases toward the end portion 50A from which the gas-liquid mixture flows out. Accordingly, it is possible to suitably separate gas and liquid by increasing the flow velocity of the gas-liquid mixture.

The rectifying plate 50 is formed to have a linear shape when viewed from above. For the gas-liquid separator 1 having such a configuration, it is possible to easily manufacture the rectifying plate 50.

When viewed in a front view, the rectifying plate 50 is fixed to the inner wall of the body portion 10 at a position higher than the introduction passage 20. In the gas-liquid separator 1 having such a configuration, it is possible to suitably suppress a situation where, of a gas-liquid mixture that flows out from the end portion 50A of the rectifying plate 50, refrigerating machine oil separated from gas is discharged through the exhaust flow passage 30.

The gas-liquid separator 1 further includes the partition plate 60 provided at a position lower than the introduction passage 20 and having the inner diameter of a toroidal shape which is smaller than the inner diameter of the body portion 10. In the gas-liquid separator 1 having such a configuration, it is unnecessary to use an auxiliary swirling mechanism, such as an inner cylinder, in the inside of the body portion 10 and it is possible to sufficiently make use of the swirl region R extending along the up-and-down direction. Accordingly, the swirl region R is narrowed and a swirl speed can be increased and hence, it is possible to separate gas and liquid more suitably.

The partition plate 60 is provided along the horizontal direction. In the gas-liquid separator 1 having such a configuration, it is possible to easily form the partition plate 60. Gas fluid from which oil is separated rises at the center of the swirl flow from the partition plate 60 toward the exhaust flow passage 30. The gas-liquid separator 1 having such a configuration does not require the tapered portion of the barrel which is provided at the lower portion of a conventional barrel, thus contributing to achieving a compact configuration.

The present invention is not limited to the above-mentioned embodiment, and various modifications are conceivable without departing from Claims.

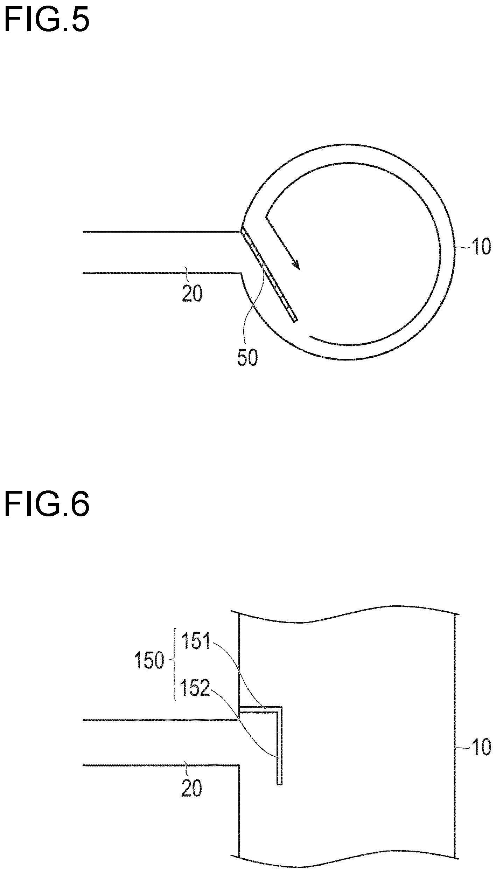

For example, in the above-mentioned embodiment, as shown in Figure 3 and Figure 4, the rectifying plate 50 includes the first extending portion 51, the second extending portion 52, and the third extending portion 53 and is formed into a square U shape, the first extending portion 51 extending substantially horizontally inward from the inner wall of the body portion 10, the second extending portion 52 being formed continuously with the first extending portion 51 and extending in the downward direction, the third extending portion 53 being formed continuously with the second extending portion 52 and extending to the inner wall of the body portion 10. However, as shown in Figure 6, a rectifying plate 150 may be formed into an L shape including a first extending portion 151 and a second extending portion 152, the first extending portion 151 extending substantially horizontally inward from the inner wall of the body portion, the second extending portion 152 being formed continuously with the first extending portion 151 and extending in the downward direction.

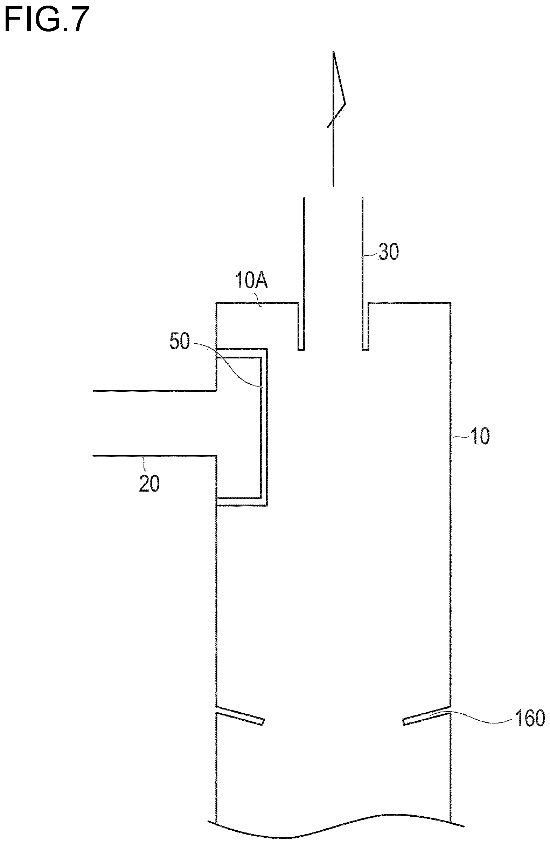

In the above-mentioned embodiment, the partition plate 60 is provided along the horizontal direction. However, as shown in Figure 7, a partition plate 160 may be configured to be inclined inward in the radial direction and in the downward direction. With such a configuration, it is possible to cause refrigerating machine oil on the partition plate 160 to descend downward along an inclined surface and hence, it is possible to suitably suppress a situation where the refrigerating machine oil is stored on the partition plate 160.

In the above-mentioned embodiment, the rectifying plate 50 is formed to have a linear shape when viewed from above. However, the configuration of the rectifying plate is not limited to the configuration that has the narrow width portion configured such that the distance between the rectifying plate and the inner wall of the body portion gradually decreases toward the end portion from which a gas-liquid mixture flows out. The rectifying plate 50 may be formed to have a curved shape, for example.

In the above-mentioned embodiment, the gas-liquid separator 1 includes the partition plate 60 having a toroidal shape. However, it is not always necessary for the gas-liquid separator 1 to include the partition plate having a toroidal shape.

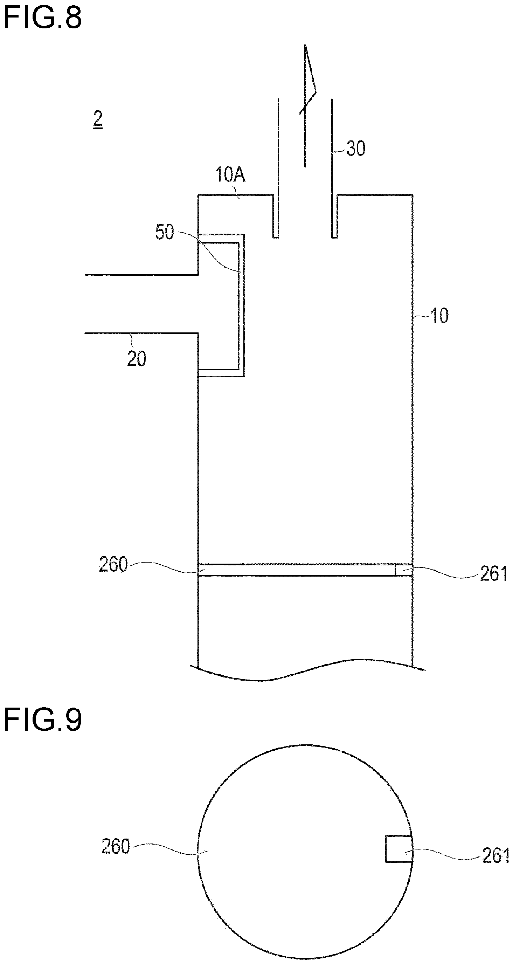

In the above-mentioned embodiment, the gas-liquid separator 1 includes the partition plate 60 having a toroidal shape. However, as shown in Figure 8 and Figure 9, a gas-liquid separator 2 may include a partition plate 260 that partitions the body portion 10 into an upper portion and a lower portion in place of the partition plate 60 having a toroidal shape. As shown in Figure 8 and Figure 9, the partition plate 260 has a through hole 261 at an end portion, the through hole 261 penetrating through the partition plate 260 in the up-and-down direction. Although a size of the through hole 261 is not particularly limited, when the inner diameter of the body portion 10 is 150 to 160 mm, the size of the through hole 261 is 15 mm × 15 mm, for example.

By providing the partition plate 260 having the through hole 261 at the end portion as described above, an amount of the gas-liquid mixture flowing to a space below the partition plate 260 is reduced and hence, it is possible to reduce violent movement of the float valve 90 and movement of an oil surface.

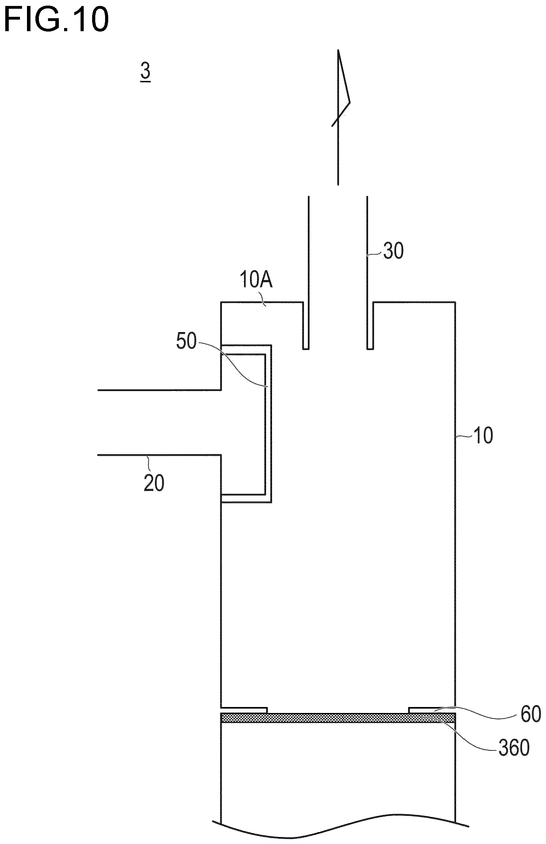

As shown in Figure 10, in a gas-liquid separator 3, a demister 360 may be attached to the partition plate 60. A method for attaching the demister 360 to the partition plate 60 is not particularly limited. Although the demister 360 is not particularly limited, a demister made of SUS304 and having a wire diameter of 0.12 mm and a density of 360kg/m3 may be used for the demister 360. In Figure 10, the demister 360 is attached to a lower side of the partition plate 60. However, the demister 360 may be attached to an upper side of the partition plate 60, or may be attached in a state of being sandwiched between the partition plates 60.

By attaching the demister 360 to the partition plate 60 as described above, the demister 360 can suitably attenuate a swirl flow of a gas-liquid mixture and hence, it is possible to reduce violent movement of the float valve 90 and movement of an oil surface.

Next, performance characteristics of the gas-liquid separator 1 will be described. First, for a gas-liquid mixture being a separation target, in a case where volume concentration of oil in a gas-liquid mixture that flows into the body portion 10 is several percent, a large amount of oil is contained and a swirling force attenuates and hence, it is preferable to use the partition plate 60 shown in Figure 1 and Figure 2. In contrast, in a case where volume concentration of oil in a gas-liquid mixture that flows into the body portion 10 is several parts per million, a small amount of oil is contained and a swirling force does not attenuate and hence, a swirl flow generated in the body portion 10 is stronger. Accordingly, it is preferable to suppress violent movement of the float valve 90 and movement of an oil surface by reducing the size of the opening of the partition plate. In a case where it is difficult to determine the size of the opening of the partition plate with respect to volume concentration of oil that flows into the body portion 10, it is preferable to reduce violent movement of the float valve 90 and movement of an oil surface by installing the demister 360 on the partition plate 60 having a large opening to provide a resistance. The above-mentioned advantageous effects can also be obtained even with the configuration of the above-mentioned partition plate 260.

### <Example>

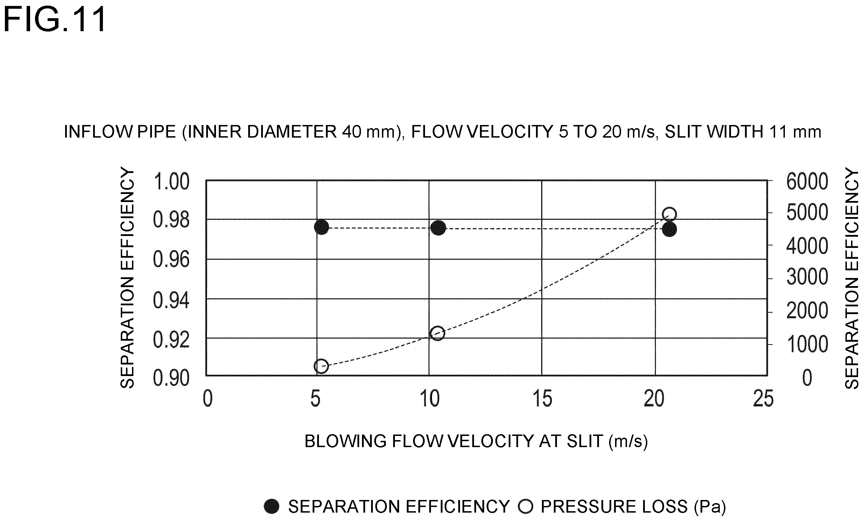

Figure 11 shows the results obtained by measuring a separation efficiency and a pressure loss when a flow velocity of a gas-liquid mixture introduced into the gas-liquid separator 1 having the above-mentioned configuration through the introduction passage 20 is changed within a range of 5 to 20 m/s.

In Figure 11, the horizontal axis shows the flow velocity of the gas-liquid mixture, black circles on the vertical axis show the separation efficiency, and white circles on the vertical axis show the pressure loss. As shown in Figure 11, when the flow velocity of the gas-liquid mixture is changed to 5 m/s, 10 m/s, 15 m/s, and 20 m/s, a separation efficiency of 97% or more can be ensured at every flow velocity. Although the pressure loss increases with an increase in flow velocity of the gas-liquid mixture, it is found that a maximum pressure loss is 5kPa, which is not an especially high numerical value.

For the characteristic of the gas-liquid separator 1, it is found that a high separation efficiency can be maintained even when a blowing velocity of a swirl flow is changed within a range of 5 m/sec to 20 m/sec. A pressure loss can be changed according to an allowable pressure loss of equipment in which the gas-liquid separator 1 is installed and hence, the degree of freedom in selection is increased.

As described above, in the method for separating refrigerating machine oil in gas with the gas-liquid separator 1 according to this embodiment, first, gas that flows into the body portion 10 through the introduction passage 20 is subject to impingement separation at the rectifying plate 50 and, then, a gas-liquid mixture that flows out from the end portion 50A of the rectifying plate 50 swirls along the inner wall of the body portion 10, so that gas and liquid are centrifuged. There is no obstacles inhibiting the formation of a swirl flow in a region where swirling starts and hence, it is possible to perform centrifugation and gravitational sedimentation by effectively using the inside of the barrel. Accordingly, it is possible to effectively make use of the space in the barrel and hence, oil is efficiently separated. Further, violent movement of an oil surface of refrigerating machine oil temporarily stored at the lower portion of the body portion 10 and reaccompanying of oil due to the swirl flow are prevented by providing the partition plate 60, 260 at a position above the oil surface and hence, it is possible to recover the separated oil in a stable manner.

Further, it is possible to omit the funnel portion provided at the lower portion and hence, it is possible to achieve a reduction in size and a compact structure. Accordingly, the gas-liquid separator 1 can be used as an oil separator of a gas compressor, can be suitably used for a high-speed multicylinder refrigerating machine, and can be more suitably used for a high-speed multicylinder refrigerating machine for ship having a restriction on a mounting space.

### Reference Signs List

- 1: gas-liquid separator
- 10: body portion
- 10A: upper end portion
- 20: introduction passage
- 30: exhaust flow passage
- 40: oil discharge flow passage
- 50, 150: rectifying plate
- 50A: end portion
- 51: first extending portion
- 52: second extending portion
- 53: third extending portion
- 54: narrow width portion
- 60, 160, 260: partition plate
- 90: float valve
- 360: demister

## Claims

1. A gas-liquid separator that separates gas and liquid from a gas-liquid mixture, the gas-liquid separator comprising:
a body portion (10) having a cylindrical shape;
an introduction passage (20) provided in a state of communicating with the body portion (10), the gas-liquid mixture being introduced through the introduction passage (20);
a rectifying plate (50; 150) to rectify the gas-liquid mixture, wherein the rectifying plate (50; 150) is attached to the body portion (10) to extend in a chord length direction of a circular arc formed by a barrel of the body portion; and
an exhaust flow passage (30) provided for gas from which liquid is separated, wherein
the rectifying plate (50; 150) has a narrow width portion configured such that a distance between the rectifying plate and an inner wall of the body portion (10) gradually decreases toward an end portion from which the gas-liquid mixture flows out, and
a swirl portion in the body portion is formed by the body portion extending in an up-and-down direction and a partition plate (60; 160; 260) provided at a position lower than the introduction passage, **characterized in that**
an insertion portion of the exhaust flow passage (30) is inserted into the body portion (10), and the insertion portion extends by an extension length that allows the insertion portion to extend downward from an upper end portion (10A) of the body portion towards a position of a height of an upper end of an extending portion (51; 151) of the rectifying plate, the extending portion extending in a horizontal direction, wherein either
the insertion portion extends downward to stop at the position of the height of the extending portion of the rectifying plate (50; 150), or
the insertion portion extends downward to stop before the insertion portion reaches the position of the height of the extending portion of the rectifying plate (50; 150).

2. The gas-liquid separator according to claim 1, wherein the rectifying plate (50; 150) is disposed to extend in the chord length direction of the circular arc formed by the barrel of the body portion (10) when viewed from above, one end of the rectifying plate is connected to the inner wall of the body portion, and the other end of the rectifying plate has a narrow width portion.

3. The gas-liquid separator according to claim 1 or 2, wherein the rectifying plate (50; 150) is attached to extend in the chord length direction of the circular arc having a length corresponding to 1/4 or less of a circumference of the body portion (10).

4. The gas-liquid separator according to claim 3, wherein the introduction passage (20) is connected at an unrestricted angle and with an unrestricted offset amount within a range of the circular arc, wherein the angle and the offset amount are with respect to a center of the body portion (10).

5. The gas-liquid separator according to any one of claims 1 to 4, wherein the rectifying plate (150) has a square U shape when viewed in a front view, and the rectifying plate (150) is fixed to the inner wall of the body portion (10) at least at a position higher than the introduction passage (20).

6. The gas-liquid separator according to any one of claims 1 to 5, wherein the partition plate (60; 160) is provided at a position lower than the introduction passage (20), and has an inner diameter smaller than an inner diameter of the body portion (10).

7. The gas-liquid separator according to any one of claims 1 to 6, wherein the partition plate (60; 160; 260) is provided along the horizontal direction.

8. The gas-liquid separator according to any one of claims 1 to 7, further comprising a demister (360) attached to the partition plate (60).

9. The gas-liquid separator according to any one of claims 1 to 8, further comprising the partition plate (260) provided at a position lower than the introduction passage (20), and configured to partition the body portion (10) into an upper portion and a lower portion, wherein a through hole (261) is formed at an end portion of the partition plate (260), the through hole (261) penetrating through the partition plate (260) in the up-and-down direction.

10. Method of using the gas-liquid separator according to any one of the previous claims, wherein a fluid is blown out from a distal end portion of the rectifying plate (50; 150), the distal end portion has a narrow width portion, and the narrow width portion is selected such that a blowing velocity of a swirl flow falls within a range of 5 m/sec to 20 m/sec.

## Patentansprüche

1. Gas-Flüssigkeits-Abscheider, der Gas und Flüssigkeit aus einem Gas-Flüssigkeits-Gemisch abtrennt, wobei der Gas-Flüssigkeits-Abscheider aufweist:
einen Körperabschnitt (10), der eine zylindrische Form hat;
einen Einleitungsdurchgang (20), der in einem Zustand der Verbindung mit dem Körperabschnitt (10) vorgesehen ist, wobei das Gas-Flüssigkeits-Gemisch durch den Einleitungsdurchgang (20) eingeleitet wird;
eine Ausrichtungsplatte (50; 150), um das Gas-Flüssigkeits-Gemisches auszuzurichten, wobei die Ausrichtungsplatte (50; 150) an dem Körperabschnitt (10) so angebracht ist, um sich in einer Sehnenlängenrichtung eines Kreisbogens, der durch einen Zylinder des Körperabschnitts ausgebildet ist, zu erstrecken; und
einen Auslassströmungskanal (30), der für Gas vorgesehen ist, aus dem Flüssigkeit abgetrennt ist, wobei
die Ausrichtungsplatte (50; 150) einen Abschnitt mit schmaler Breite hat, der so konfiguriert ist, dass ein Abstand zwischen der Ausrichtungsplatte und einer Innenwand des Körperabschnitts (10) graduell in Richtung zu einem Endabschnitt hin abnimmt, aus dem das Gas-Flüssigkeits-Gemisch ausströmt, und
ein Wirbelabschnitt in dem Körperabschnitt durch den Körperabschnitt, der sich in einer Auf- und Ab-Richtung erstreckt, ausgebildet ist, und eine Trennplatte (60; 160; 260) an einer Position unterhalb des Einleitungsdurchgangs vorgesehen ist, **dadurch gekennzeichnet, dass**
ein Einführabschnitt des Auslassströmungskanals (30) in den Körperabschnitt (10) eingeführt ist, und der Einführabschnitt sich um eine Erstreckungslänge erstreckt, die es dem Einführabschnitt ermöglicht, sich von einem oberen Endabschnitt (10A) des Körperabschnitts in Richtung zu einer Position einer Höhe eines oberen Endes eines Erstreckungsabschnitts (51; 151) der Ausrichtungsplatte nach unten zu erstrecken, wobei sich der Erstreckungsabschnitt in einer horizontaler Richtung erstreckt, wobei entweder
der Einführabschnitt sich nach unten erstreckt, um an der Position der Höhe des Erstreckungsabschnitts der Ausrichtungsplatte (50; 150) zu stoppen, oder
der Einführabschnitt sich nach unten erstreckt, um zu stoppen, bevor der Einführabschnitt die Position der Höhe des Erstreckungsabschnitts der Ausrichtungsplatte (50; 150) erreicht.

2. Gas-Flüssigkeits-Abscheider nach Anspruch 1, wobei die Ausrichtungsplatte (50; 150) so angeordnet ist, um sich von oben betrachtet in der Sehnenlängenrichtung des Kreisbogens, der durch den Zylinder des Körperabschnitts (10) ausgebildet ist, zu erstrecken, wobei ein Ende der Ausrichtungsplatte mit der Innenwand des Körperabschnitts verbunden ist und das andere Ende der Ausrichtungsplatte einen Abschnitt mit schmaler Breite hat.

3. Gas-Flüssigkeits-Abscheider nach Anspruch 1 oder 2, wobei die Ausrichtungsplatte (50; 150) so angebracht ist, um sich in der Sehnenlängenrichtung des Kreisbogens, der eine Länge hat, die 1/4 oder weniger eines Umfangs des Körperabschnitts (10) entspricht, zu erstrecken.

4. Gas-Flüssigkeits-Abscheider nach Anspruch 3, wobei der Einleitungsdurchgang (20) in einem uneingeschränkten Winkel und mit einem uneingeschränkten Versatzbetrag innerhalb eines Bereichs des Kreisbogens verbunden ist, wobei sich der Winkel und der Versatzbetrag auf eine Mitte des Körperabschnitts (10) beziehen.

5. Gas-Flüssigkeits-Abscheider nach einem der Ansprüche 1 bis 4, wobei die Ausrichtungsplatte (150) von vorne betrachtet eine quadratische U-Form hat und die Ausrichtungsplatte (150) an der Innenwand des Körperabschnitts (10) zumindest an einer Position, die höher als der Einleitungsdurchgang (20) ist, befestigt ist.

6. Gas-Flüssigkeits-Abscheider nach einem der Ansprüche 1 bis 5, wobei die Trennplatte (60; 160) an einer Position unterhalb des Einleitungsdurchgangs (20) vorgesehen ist und einen Innendurchmesser hat, der kleiner als ein Innendurchmesser des Körperabschnitts (10) ist.

7. Gas-Flüssigkeits-Abscheider nach einem der Ansprüche 1 bis 6, wobei die Trennplatte (60; 160; 260) entlang der horizontalen Richtung vorgesehen ist.

8. Gas-Flüssigkeits-Abscheider nach einem der Ansprüche 1 bis 7, ferner aufweisend einen Tropfenabscheider (360), der an der Trennplatte (60) angebracht ist.

9. Gas-Flüssigkeits-Abscheider nach einem der Ansprüche 1 bis 8, ferner aufweisend die Trennplatte (260), die an einer Position unterhalb des Einleitungsdurchgangs (20) vorgesehen ist und konfiguriert ist, um den Körperabschnitt (10) in einen oberen Abschnitt und einen unteren Abschnitt zu trennen, wobei ein Durchgangsloch (261) an einem Endabschnitt der Trennplatte (260) ausgebildet ist, wobei das Durchgangsloch (261) die Trennplatte (260) in der Auf- und Ab-Richtung durchdringt.

10. Verfahren zur Verwendung des Gas-Flüssigkeits-Abscheiders gemäß einem der vorhergehenden Ansprüche, wobei eine Flüssigkeit aus einem distalen Endabschnitt der Ausrichtungsplatte (50; 150) ausgeblasen wird, wobei der distale Endabschnitt einen Abschnitt mit schmaler Breite hat und der Abschnitt mit schmaler Breite so gewählt ist, dass eine Blasgeschwindigkeit einer Wirbelströmung in einem Bereich von 5 m/s bis 20 m/s liegt.

## Revendications

1. Séparateur gaz-liquide qui sépare le gaz et le liquide d'un mélange gaz-liquide, le séparateur gaz-liquide comprenant :
une partie corps (10) présentant une forme cylindrique ;
un passage d'introduction (20) disposé dans un état de communication avec la partie corps (10), le mélange gaz-liquide étant introduit par le passage d'introduction (20) ;
une plaque de rectification (50; 150) pour rectifier le mélange gaz-liquide, dans lequel la plaque de rectification (50; 150) est fixée à la partie corps (10) pour s'étendre dans le sens de la longueur de corde d'un arc de cercle formé par un cylindre de la partie corps ; et
un passage d'écoulement d'échappement (30) prévu pour le gaz duquel le liquide est séparé, dans lequel
la plaque de rectification (50; 150) présente une partie de largeur étroite configurée de telle sorte qu'une distance entre la plaque de rectification et une paroi interne de la partie corps (10) diminue progressivement vers une partie d'extrémité de laquelle le mélange gaz-liquide s'écoule, et
une partie tourbillonnaire dans la partie corps est formée par la partie corps s'étendant dans une direction de haut en bas et une plaque de séparation (60 ; 160 ; 260) disposée à une position plus basse que le passage d'introduction, **caractérisé en ce que**
une partie d'insertion du passage d'écoulement d'échappement (30) est insérée dans la partie corps (10), et la partie d'insertion s'étend sur une longueur d'extension qui permet à la partie d'insertion de s'étendre vers le bas à partir d'une partie d'extrémité supérieure (10A) de la partie corps vers une position d'une hauteur d'une extrémité supérieure d'une partie d'extension (51 ; 151) de la plaque de rectification, la partie d'extension s'étendant dans une direction horizontale, dans laquelle soit
la partie d'insertion s'étend vers le bas pour s'arrêter à la position de la hauteur de la partie d'extension de la plaque de rectification (50; 150), soit
la partie d'insertion s'étend vers le bas pour s'arrêter avant que la partie d'insertion n'atteigne la position de hauteur de la partie d'extension de la plaque de rectification (50 ; 150).

2. Séparateur gaz-liquide selon la revendication 1, dans lequel la plaque de rectification (50; 150) est disposée pour s'étendre dans le sens de la longueur de corde de l'arc de cercle formé par le cylindre de la partie corps (10) lorsqu'elle est vue de dessus, une extrémité de la plaque de rectification est reliée à la paroi interne de la partie corps et l'autre extrémité de la plaque de rectification présente une partie de largeur étroite.

3. Séparateur gaz-liquide selon la revendication 1 ou 2, dans lequel la plaque de rectification (50; 150) est fixée pour s'étendre dans le sens de la longueur de corde de l'arc de cercle présentant une longueur correspondant à 1/4 ou moins d'une circonférence de la partie corps (10).

4. Séparateur gaz-liquide selon la revendication 3, dans lequel le passage d'introduction (20) est relié à un angle illimité et avec une quantité de décalage illimitée dans une plage de l'arc de cercle, dans lequel l'angle et la quantité de décalage sont définis par rapport à un centre de la partie corps (10).

5. Séparateur gaz-liquide selon l'une quelconque des revendications 1 à 4, dans lequel la plaque de rectification (150) présente une forme de U carré lorsqu'elle est vue en vue de face, et la plaque de rectification (150) est fixée à la paroi interne de la partie corps (10) au moins à une position plus haute que le passage d'introduction (20).

6. Séparateur gaz-liquide selon l'une quelconque des revendications 1 à 5, dans lequel la plaque de séparation (60 ; 160) est disposée à une position plus basse que le passage d'introduction (20) et présente un diamètre interne plus petit qu'un diamètre interne de la partie corps (10).

7. Séparateur gaz-liquide selon l'une quelconque des revendications 1 à 6, dans lequel la plaque de séparation (60 ; 160 ; 260) est disposée le long de la direction horizontale.

8. Séparateur gaz-liquide selon l'une quelconque des revendications 1 à 7, comprenant en outre un dévésiculeur (360) fixé à la plaque de séparation (60).

9. Séparateur gaz-liquide selon l'une quelconque des revendications 1 à 8, comprenant en outre la plaque de séparation (260) disposée à une position plus basse que le passage d'introduction (20) et configurée pour diviser la partie corps (10) en une partie supérieure et une partie inférieure, dans lequel un trou traversant (261) est formé au niveau d'une partie d'extrémité de la plaque de séparation (260), le trou traversant (261) pénétrant à travers la plaque de séparation (260) dans la direction de haut en bas.

10. Procédé d'utilisation du séparateur gaz-liquide selon l'une quelconque des revendications précédentes, dans lequel un fluide est soufflé depuis une partie d'extrémité distale de la plaque de rectification (50; 150), la partie d'extrémité distale présente une partie de largeur étroite et la partie de largeur étroite est sélectionnée de telle sorte qu'une vitesse de soufflage d'un écoulement tourbillonnaire se situe dans une plage de 5 m/s à 20 m/s.
